# EUROPÄISCHE PATENTANMELDUNG

(11) **EP 2 908 399 A2**
(43) Veröffentlichungstag der Anmeldung: **19.08.2015**
(21) Anmeldenummer: 15152066.5
(22) Anmeldetag: 22.01.2015
(51) Int. Cl.: H02J 3/12

(54) **Verfahren zum Überwachen von Zuständen eines Niederspannungsnetzes**

(30) Priorität: 18.02.2014 AT 501202014
(71) Anmelder: Siemens AG Österreich, 1210 Wien (AT)
(72) Erfinder: Mosshammer, Ralf, 1020 Wien (AT); Einfalt, Alfred, 1210 Wien (AT); Lugmaier, Andreas, 1140 Wien (AT)
(74) Vertreter: Maier, Daniel Oliver

(57) **Zusammenfassung**

Gezeigt wird ein Verfahren zum Überwachen von Zuständen eines Niederspannungsnetzes mit Hilfe von Netzdaten dieses Niederspannungsnetzes, wobei das Niederspannungsnetz zumindest eine dezentrale Erzeugungsanlage (9) und einen Verbraucher aufweist, wobei die Erzeugungsanlage (9) und der Verbraucher (10, 11) über Datenverbindungen mit einer gemeinsamen Automatisierungseinheit (8) verbunden sind, welche Netzdaten an eine zugeordnete Regelungseinheit (7) zum Regeln der Erzeugungsanlage (9) und der Verbraucher (10, 11) leitet, wobei die Regelungseinheit (7) Netzdaten an eine das gesamte Niederspannungsnetz überwachende, übergeordnete Kontrollinstanz (1) sendet und diese Stellbefehle an die Regelungseinheit (7) senden kann.

Das Verfahren ist dadurch gekennzeichnet, dass die Netzdaten der Regelungseinheit (7) kontinuierlich in einer Datenbank (3) gespeichert werden, eine Kontrolleinheit (2) daraus für den Normalbetrieb zulässige Werte der Netzdaten berechnet und bei Abweichung der aktuellen Netzdaten von den für den Normalbetrieb zulässigen Werten eine Störungsmeldung ausgibt.

## Beschreibung

### Technisches Gebiet

Die Erfindung betrifft ein Verfahren zum Überwachen von Zuständen eines Niederspannungsnetzes mit Hilfe von Netzdaten dieses Niederspannungsnetzes,
wobei das Niederspannungsnetz zumindest eine dezentrale Erzeugungsanlage, vorzugsweise eine Photovoltaikanlage, aufweist,
wobei das Niederspannungsnetz zumindest einen Verbraucher, vorzugsweise in Form einer flexiblen Last und/oder einer Ladeeinheit für Elektromobilitätsanwendungen, aufweist,
wobei die Erzeugungsanlage und der Verbraucher über Datenverbindungen mit einer gemeinsamen Automatisierungseinheit verbunden sind, welche Netzdaten an eine zugeordnete Regelungseinheit zum Regeln der Erzeugungsanlage und der Verbraucher leitet,
wobei die Regelungseinheit Netzdaten an eine das gesamte Niederspannungsnetz überwachende, übergeordnete Kontrollinstanz sendet und diese Stellbefehle an die Regelungseinheit senden kann.

Als Netzdaten werden insbesondere Messwerte folgender Größen verstanden: Spannung an einer bestimmten Stelle im Niederspannungsnetz, insbesondere an einem Netzknoten und/oder dem Transformator, Einspeiseleistung und/oder Verbrauch an einem Netzknoten, Strom an einer bestimmten Stelle im Niederspannungsnetz, insbesondere an einem Netzknoten, Zustände der Aktuatoren, z.B. Kennlinien von Wechselrichtern im Niederspannungsnetz oder die Stufenstellung des Transformators des Niederspannungsnetzes.

Die Automatisierungseinheit sammelt einerseits die Netzdaten der Erzeugungsanlagen und der Verbraucher und leitet sie der Regelungseinheit zu, andererseits leitet sie die Regelbefehle der Regelungseinheit an die Erzeugungsanlagen und Verbraucher weiter.

Die das gesamte Niederspannungsnetz überwachende, übergeordnete Kontrollinstanz sendet dann Stellbefehle an die Regelungseinheit, wenn zum Beispiel wegen Netzüberlastung eine Abregelung der Erzeugungsanlagen notwendig ist.

Niederspannungsnetze sind ein Teil des Stromnetzes zur Verteilung der elektrischen Energie an den größten Teil der elektrischen Endverbraucher, der aus Niederspannungsgeräten besteht. Um Spannungsverluste zu vermeiden, sind Niederspannungsnetze in der räumlichen Ausdehnung auf einen Bereich von einigen 100 m bis zu einigen wenigen Kilometern beschränkt. Sie werden daher regional über Transformatorenstationen aus einem übergeordneten Mittelspannungsnetz gespeist. Sie werden in Europa üblicher Weise mit einer Netzspannung von 230 V (zwischen jedem Außenleiter und dem Neutralleiter) bzw. 400 V (zwischen den drei Außenleitern), jedenfalls aber nur bis zu 1000 V betrieben. Bemessungsleistungen einzelner Ortsnetztransformatoren können je nach Zielnetzplanung des jeweiligen Verteilnetzbetreibers variieren, liegen aber typischer Weise bei 250 oder 400kVA für ländliche Gebiete und 630 oder 800kVA für innerstädtische Gebiete.

Komponenten des Niederspannungsnetzes können sein: Stromerzeuger (z.B. Photovoltaikanlagen, Kleinwindkraftanlagen), Speicher (z.B. Batterien, Wärmepumpen), Ladestationen für Elektrofahrzeuge, flexible Verbraucher (z.B. elektrische Speicherheizungen, Gebäude mit und ohne Gebäudeautomationssystem) und Netzbetriebsmittel (Transformatoren, Leitungen, Sicherungen, Messgeräte wie Smart Meter,...).

### Stand der Technik

In den letzten Jahren zeigte sich aufgrund der zunehmenden Verbreitung von Monitoring- und Automatisierungssystemen in Niederspannungsnetzen eine Entwicklung in Richtung sogenannter "Smart Grids" (intelligente Stromnetze), wobei diese Entwicklung durch die steigenden Anforderungen an den Netzbetrieb und die damit einhergehende Erhöhung der Anzahl an Netzknoten, welche in dezentralen Automatisierungseinheiten zusammengeführt werden, immer mehr an Bedeutung gewinnt. Dies wird auch durch die laufende Verbreitung von dezentralen Erzeugungsanlagen (DEA) zur Spannungseinspeisung und Elektromobilitätsanwendungen als Verbraucher weiter gefördert. Dahingehend sind aus dem Stand der Technik diverse verteilte Anlagen zur dezentralen Einspeisung, beispielsweise in Form von Photovoltaikanlagen, bekannt.

Dadurch stehen immer mehr Messwerte und Parameter zur Unterstützung des optimalen Netzbetriebes zur Verfügung, deren sichere Verarbeitung zu gewährleisten ist, wobei speziell bei Niederspannungsnetzen mit vielen Netzknoten immer größere Probleme in Form mangelnder Prozess- und Netzwerksicherheit bei IT-basierten Automatisierungssystemen aufgrund des steigenden Verbrauches auftreten, weshalb darüber hinaus die im Niederspannungsnetz verteilten Lösungen möglichst konfigurationsfrei und autonom zu halten sind.

Diese Problematik wird durch die Verwendung kommerzieller Betriebssysteme und die von Nutzern eingebrachte Algorithmik zur besseren Verteilung in Ihren lokalen, betrieblichen Niederspannungsnetzen verstärkt, da dadurch immer stärkere Probleme hinsichtlich der Prozesssicherheit im gesamten Niederspannungsnetz auftreten. Dies umfasst fehlerhafte Implementierungen als auch zugrundeliegende Probleme der Infrastruktur, wie Ausfälle von Kommunikationsverbindungen und Abstürze des Betriebssystems. Darüber hinaus stellen feindliche Angriffe, sogenannte Hacking-Attacken, auf solche Netzwerkarchitekturen ein schwerwiegendes Problem dar.

### Darstellung der Erfindung

Es ist daher eine Aufgabe der vorliegenden Erfindung die derzeit vorliegende mangelnde Prozesssicherheit durch die Schaffung eines Verfahrens zum Überwachen von Netzzuständen zu verringern.

Diese Aufgabe wird durch ein Verfahren mit den Merkmalen des Patentanspruchs 1 gelöst und umfasst ein Verfahren zum Überwachen von Zuständen eines Niederspannungsnetzes mit Hilfe von Netzdaten dieses Niederspannungsnetzes,
wobei das Niederspannungsnetz zumindest eine dezentrale Erzeugungsanlage, vorzugsweise eine Photovoltaikanlage, aufweist,
wobei da Niederspannungsnetz zumindest einen Verbraucher, vorzugsweise in Form einer flexiblen Last und/oder einer Ladeeinheit für Elektromobilitätsanwendungen, aufweist,
wobei die Erzeugungsanlage und der Verbraucher über Datenverbindungen mit einer gemeinsamen Automatisierungseinheit verbunden sind, welche Netzdaten an eine zugeordnete Regelungseinheit zum Regeln der Erzeugungsanlage und der Verbraucher leitet,
wobei die Regelungseinheit Netzdaten an eine das gesamte Niederspannungsnetz überwachende, übergeordnete Kontrollinstanz sendet und diese Stellbefehle an die Regelungseinheit senden kann.

Erfindungsgemäß ist dabei vorgesehen, dass die Netzdaten der Regelungseinheit (also die Netzdaten, welche die Regelungseinheit erhält) kontinuierlich in einer Datenbank gespeichert werden, eine Kontrolleinheit daraus für den Normalbetrieb zulässige Werte der Netzdaten berechnet und bei Abweichung der aktuellen Netzdaten von den für den Normalbetrieb zulässigen Werten eine Störungsmeldung ausgibt.

Das erfindungsgemäße Verfahren verwirklicht eine autonome selbstlernende Überwachungsfunktion, die in der Lage ist, konforme (= dem regulären Betrieb entsprechende) Abläufe durch die Aufzeichnung von historischen Daten und Berechnen entsprechender Statistiken zu erkennen und Abweichungen von diesen Abläufen zu erkennen und zu melden, bei einigen Ausführungsformen auch zu unterbinden.

Hierbei ist anzumerken, dass die dezentrale Datenkonzentration und Aggregation von Daten aus unterschiedlichsten Quellen in Form der Datenbank an geeigneter Stelle, beispielsweise in der Niederspannungstransformatorstation, einen wesentlichen Punkt darstellt, um die Sicherheit bei der Verarbeitung dieser Daten bzw. Netzdaten uneingeschränkt sicherzustellen.

Dadurch ist es möglich die Netzdaten laufend in einer Datenbank zu speichern, wodurch eine Kontrolleinheit darauf zugreifen kann, um unter Anwendung diverser Algorithmen Statistiken zu erstellen, mit deren Hilfe es möglich ist etwaige Abweichungen zu erkennen. Neben statistischen Regeln für die Überwachung von Datenpunkten bzw. deren Messwerten und Kommunikationsschnittstellen bildet das System bestehend aus Kontrolleinheit und Datenbank laufend eine immer größer werdende Konfidenz, wobei mit einer laufend steigenden Menge an Daten immer komplexere Statistiken, neue Wertebereiche und Profile mit immer kürzer werdenden Änderungsgeschwindigkeiten und Alterungsprozessen diverser Netzwerkkomponenten berechnet werden können.

Dabei können Entdeckungen irregulärer Abläufe zunächst an die übergeordnete Kontrollinstanz gemeldet werden, indem die Störungsmeldung der Kontrolleinheit an die übergeordnete Kontrollinstanz gesendet wird. Eine Überwachung der Reaktion dieser Kontrollinstanz erlaubt es der Kontrolleinheit mit größer werdender Konfidenz eigene Entscheidungen, beispielsweise im Falle eines kritischen Versagens der Kommunikationsinfrastruktur, zu treffen bzw. selbstständig zu handeln.

Insofern kann also vorgesehen sein, dass neben den Netzdaten auch die Stellbefehle der übergeordneten Kontrollinstanz kontinuierlich in der Datenbank gespeichert werden, die Kontrolleinheit eine Verknüpfung zwischen Netzdaten und daraus resultierendem Stellbefehl der übergeordneten Kontrollinstanz herstellt und die Kontrolleinheit bei Ausfall der übergeordneten Kontrollinstanz statt dieser jenen Stellbefehl an die Regelungseinheit sendet, wenn Netzdaten vorliegen, die mit dem Stellbefehl verknüpft sind.

Um sicherzustellen, dass die Kontrolleinheit nur bei ausreichender Datenbasis eingreift, kann vorgesehen sein, dass die Kontrolleinheit erst dann Störungsmeldungen ausgibt oder Stellbefehle an die Regelungseinheit sendet, wenn die Datenbank eine vorgegebene Anzahl an Netzdaten gesammelt hat.

In einer erfindungsgemäßen Ausführungsform werden die in der Regelungseinheit eintreffenden Netzdaten und Stellbefehle der übergeordneten Kontrollinstanz kontinuierlich mit Hilfe einer Speicherleitung von der Regelungseinheit in die Datenbank geleitet und dort gespeichert.

Dies trifft speziell auf die von der Kontrollinstanz getroffenen Entscheidungen zu, da basierend auf diesen Entscheidungen die Kontrolleinheit lernt bzw. basierend auf der Beobachtung dieser Entscheidungen und einer ausreichend großen Menge an Dateninformationen selbst derartige Entscheidungen speziell bei Ausfall der Kommunikationsinfrastruktur treffen kann.

In einer weiteren erfindungsgemäßen Ausführungsform sendet bei Ausfall der übergeordneten Kontrollinstanz die Kontrolleinheit mit Hilfe zumindest einer Steuerbefehlsleitung Stellbefehle an die Regelungseinheit basierend auf den in der Datenbank gespeicherten Netzdaten und Stellbefehlen.

Es ist denkbar, dass die Kontrolleinheit aktuelle Netzdaten zwischen der Regelungseinheit und der Automatisierungseinheit zum Beobachten/Überwachen mittels zumindest einer Kontrollsignalleitung abgreift, wodurch es möglich ist schrittweise zukünftige Stellbefehle an die Regelungseinheit zu verbessern.

Dabei kann die Kontrolleinheit die Netzdaten und Stellbefehle zwischen der Regelungseinheit und der Kontrollinstanz zur Überwachung mittels zumindest einer Kontrollsignalleitung abgreifen.

Dabei ist es in gleicher Weise möglich, dass die Kontrolleinheit die Netzdaten und Stellbefehle zwischen der Regelungseinheit und der Automatisierungseinheit zur Überwachung mittels zumindest einer Kontrollsignalleitung abgreift.

In einer weiteren erfindungsgemäßen Ausführungsform werden von der Kontrolleinheit Abweichungen der aktuellen Netzdaten über eine übliche Durchschnittsabweichung hinaus durch laufenden Zugriff auf die Netzdaten in der Datenbank und deren Abgleich detektiert. Hierzu ist es sinnvoll, dass Abweichungen der aktuellen Netzdaten von der Kontrolleinheit an die Regelungseinheit mittels der Steuerbefehlsleitung gemeldet werden.

Vorzugsweise ist vorgesehen, dass die Kontrolleinheit bei Überschreiten einer vorgegebenen zulässigen Abweichung der in der Datenbank eintreffenden Netzdaten von einem Mittelwert der in der Datenbank bereits gespeicherten entsprechenden Netzdaten eine Störungsmeldung ausgibt. Für jede konkrete Größe der Netzdaten wird in der Regel eine bestimmte, nämlich signifikante, Abweichung vorbestimmt, bei deren Überschreitung dann eine Störungsmeldung erfolgt. Die vorgegebene Abweichung muss kein absoluter Wert sein (wie z.B. +/- 10 V für die Spannung an einem bestimmten Netzknoten), sondern wird in der Regel ein relativer Wert sein (wie z.B. eine bestimmte prozentuelle Abweichung von einem Mittelwert). So könnte etwa bei Abweichungen von mehr als 10 % der in der Datenbank eintreffenden Netzdaten von einem Mittelwert der in der Datenbank bereits gespeicherten entsprechenden Netzdaten eine Störungsmeldung ausgegeben werden.

Die vorgegebene Abweichung kann eine Kombination von mehreren Abweichungen einzelner Größen sein: so kann etwa die vorgegebene Abweichung darin bestehen, dass der Spannungswert an einem ersten Netzknoten und an einem zweiten Netzknoten um jeweils einen bestimmten Wert überschritten sein müssen, während die Überschreitung des Spannungswertes an nur einem der beiden Netzknoten keine Überschreitung der vorgegebenen Abweichung darstellen würde.

Die zulässige Abweichung für eine bestimmte Größe kann von außen vorgegeben bzw. zu Beginn des Verfahrens festgelegt werden. In der Regel wird die zulässige Abweichung durch die Kontrolleinheit aber im Laufe des erfindungsgemäßen Verfahrens durch Lernen ermittelt: so werden etwa jene Abweichungen, die von der Kontrollinstanz als kritisch angesehen werden und einen Stellbefehl an die Regeleinheit nach sich ziehen, jedenfalls als außerhalb der Grenze für die zulässige Abweichung angesehen.

Die Störungsmeldung kann von der Kontrolleinheit an die Regelungseinheit mittels der Steuerbefehlsleitung gemeldet werden.

Abweichungen der aktuellen Netzdaten können mit einer größer werdenden Datenbank zuverlässiger detektiert werden. Abweichungen der eintreffenden Netzdaten können von der Kontrolleinheit auch direkt an eine höherstufige Systemebene, vorzugsweise die Kontrollinstanz, gemeldet werden.

Schließlich sieht eine Ausführungsform der Erfindung vor, dass die Regelungseinheit durch Computerprogramme mit offener Architektur (z.B. Java OSGI) und/oder unter Verwendung von Standardbetriebssystemen, wie Linux, NetBSD oder Microsoft Windows verwirklicht wird. Da die Kontrolleinheit erfindungsgemäß die Regelungseinheit überwacht, ist es möglich, auch die erwähnten Computerprogramme mit offener Architektur oder Standardbetriebssysteme zu verwenden, die in der Regel nicht so zuverlässig sind wie proprietäre Hard- oder Software-basierte Regelungen. Wenn man ein herkömmliches Betriebssystem verwendet, wird damit Dritten ermöglicht, dass System einfach zu erweitern, im Gegensatz zu den proprietären Ausführungsschichten üblicher Automatisierungssysteme, die meist sehr spezifische Betriebssysteme verwenden.

In der Regel werden die Regelungseinheit und die Automatisierungseinheit auf dem gleichen Betriebssystem basieren und dieselbe Hardware verwenden.

Besonders vorteilhaft ist es, wenn die Kontrolleinheit auf dem gleichen Betriebssystem basiert wie die Regelungseinheit. In der Regel werden auch die Automatisierungseinheit und/oder die Kontrollinstanz das gleiche Betriebssystem wie die Kontrolleinheit verwenden. Durch die Verwendung des gleichen Betriebssystems ist es möglich, etwaige Latenzzeiten gering zu halten.

Wenn die Kontrolleinheit auf dem gleichen Betriebssystem basiert wie die Regelungseinheit, kann dies so verwirklicht sein, dass die Software der Kontrolleinheit auf ein- und demselben Betriebssystem (und damit auf der gleichen Hardware) abläuft wie die Regelungseinheit, was besonders geringe Latenzzeiten bedingt und Übertragungsfehler zwischen Regelungseinheit und Kontrolleinheit ausschließt. Allerdings sind bei einer Fehlfunktion der Hardware oder des Betriebssystems dann sowohl die Kontrolleinheit als auch die Regelungseinheit betroffen. Eine hinsichtlich Ausfallssicherheit bessere Ausführungsform ist, dass die Software der Kontrolleinheit auf einer eigenen Hardware (z.B. einem Prozessor mit Speicherchip) läuft, die mit der Hardware der Regelungseinheit - etwa über eine USB- oder Ethernet-Schnittstelle - verbunden ist.

Das beschriebene Verfahren eignet sich somit für PC- oder mikrokontrollerbasierte Automatisierungslösungen, welche eine hohe Prozess- und IT-Sicherheit voraussetzen, wobei ein vergleichbares Niveau zu eingebetteten, proprietären Lösungen gegeben ist ohne dabei die Vorteile einer offenen Architektur aufzugeben. Die bekannten Schwachstellen solcher offenen Architekturen werden von dem erfindungsgemäßen Verfahren adressiert und in kostengünstiger Weise mit minimalem Konfigurationsaufwand behoben. Das erlaubt in der Folge eine freie Verteilung von intelligenten Algorithmen in einem Niederspannungsnetz und die einfache Bereitstellung von angepassten Algorithmen durch den Nutzer.

Eine für das erfindungsgemäße Verfahren geeignete Vorrichtung umfasst
- eine Automatisierungseinheit, welche über Datenverbindungen mit zumindest einer dezentralen Erzeugungsanlage und mit zumindest einem Verbraucher verbunden ist,
- eine der Automatisierungseinheit zugeordnete Regelungseinheit zum Regeln der Erzeugungsanlage und der Verbraucher, welche zur Datenübertragung mit der Automatisierungseinheit verbunden ist,
- eine das gesamte Niederspannungsnetz überwachende, übergeordnete Kontrollinstanz, welche zum Austausch von Netzdaten und Stellbefehlen mit der Regelungseinheit verbunden ist, wobei

- eine Datenbank vorgesehen ist, mit welcher Netzdaten der Regelungseinheit kontinuierlich gespeichert werden können,
- eine Kontrolleinheit vorgesehen ist, welche mit der Datenbank verbunden ist und mit welcher für den Normalbetrieb zulässige Werte der Netzdaten berechnet und bei Abweichung der aktuellen Netzdaten von den für den Normalbetrieb zulässigen Werten eine Störungsmeldung ausgegeben werden kann.

### Kurzbeschreibung der Figuren

Zur weiteren Erläuterung der Erfindung wird im nachfolgenden Teil der Beschreibung auf die Figur Bezug genommen, aus der weitere vorteilhafte Ausgestaltungen, Einzelheiten und Weiterbildungen der Erfindung zu entnehmen sind. Dabei zeigt:

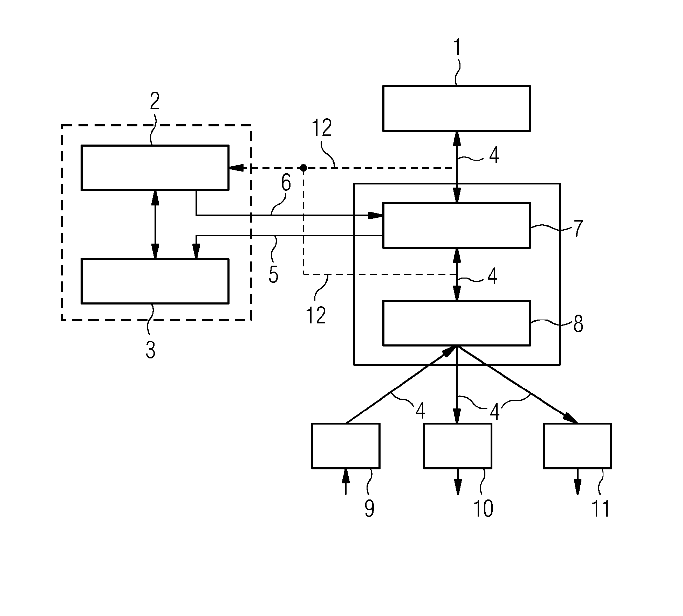

- Fig. 1: eine schematische Darstellung des prinzipiellen Schaltungsaufbaues einer Kontrolleinheit zum Überwachen von Zuständen eines Niederspannungsnetzes.

### Ausführung der Erfindung

Die Grundidee der in Fig. 1 dargestellten Lösung ist eine dezentrale Anordnung einer Kontrolleinheit 2, welche mittels zumindest einer Netzdatenverbindung 4 direkt aus- und eingehende Netzdaten einer Regelungseinheit 7 überwacht. Dabei greift die Kontrolleinheit 2 auf die Netzdaten in einer Datenbank 3 zu, welche mittels einer Speicherleitung 5 von der Regelungseinheit 7 in der Datenbank 3 gespeichert werden, und nutzt diese Daten zum Berechnen etwaiger Statistiken.

Üblicherweise detektiert eine übergeordnete Kontrollinstanz 1 (z.B. eine Supervisory Control and Data Acquisition (SCADA)) etwaige irreguläre Abläufe im Niederspannungsnetz und sendet die notwendigen korrigierenden Steuerbefehle bzw. Stellbefehle an die Regelungseinheit 7. Um eine höhere Prozesssicherheit zu gewährleisten, überwacht die Kontrolleinheit 2 die Reaktionen bzw. Stellbefehle der Kontrollinstanz 1. Somit ist es mit größer werdender Konfidenz der Kontrolleinheit 2 möglich eigene Entscheidungen zu treffen, die jenen der Kontrollinstanz 1 entsprechen würden.

Mit anderen Worten fungiert die Kontrolleinheit 2 mit der Zeit, sobald genügend Netzdaten in der Datenbank 3 zur Verfügung stehen, als selbstständige Kontrollinstanz 1, welche etwaige Steuer- bzw. Stellbefehle mittels zumindest einer Steuerbefehlsleitung 6 an die Regelungseinheit 7 sendet.

In einer weiteren Ausführungsform fungiert die Kontrolleinheit 2 von Anfang an als Entscheidungsträger, wobei dies voraussetzt, dass genügend Netzdaten und korrespondierende Stellbefehle in der Datenbank 3 zur Verfügung stehen.

Die Regelungseinheit 7 steht im direkten Kontakt mit der Automatisierungseinheit 8 mit digitalen/analogen Ein- und Ausgängen oder PLC/DLC-Modems, welche die Energieeinspeiser in Form dezentraler Erzeugungsanlagen 9, beispielsweise in Form von Photovoltaikanlagen, und etwaige Lasten, in Form von Ladeeinheiten 10 für Elektromobilitätsanwendungen oder flexible Lasten 11, miteinander verknüpft. Dabei ist wesentlich, dass die Kontrolleinheit 2 die aktuellen Netzdaten und/oder Stellbefehle mittels zumindest einer Netzdatenverbindung 4 laufend abfragt bzw. die Netzdaten überwacht und beobachtet, wodurch es auch gemäß obiger Ausführungsform möglich ist, dass die Kontrolleinheit 2 die Daten der übergeordneten Kontrollinstanz 1 abfragt und basierend auf deren Entscheidungen mit einer ausreichend großen Datenbank 3 autonome Entscheidungen trifft.

Eine Kontrollsignalleitung 12 greift Netzdaten/Stellbefehle zwischen der Regelungseinheit 7 und der Automatisierungseinheit 8 ab, eine weitere - alternative oder zusätzliche - Kontrollsignalleitung 12 greift Netzdaten/Stellbefehle zwischen der Regelungseinheit 7 und der Kontrollinstanz 1 ab.

Hierbei ist von Vorteil, wenn die Kontrolleinheit 2 auf dem gleichen Betriebssystem wie die Kontrollinstanz 1, die Regelungseinheit 7 und die Automatisierungseinheit 8 beruht, wodurch es möglich ist etwaige Latenzzeiten gering zu halten. Konkret können dadurch auch Problemstellungen beim Einsatz von "Smart Meters", das sind sogenannte intelligente Zähler, oder anderen Messinstrumenten in Niederspannungsnetzen zum aktiven Netzmanagement gelöst werden. Insbesondere wenn die Kommunikation der Messstellen zur Datenbank 3, über Power Line Communications (PLC) bzw. Distribution Line Communication (DLC) erfolgt.

Nachteilig bei solchen Komponenten ist, dass erhebliche Latenzzeiten bei der Übertragung bzw. auch vorübergehende Unterbrechungen der Kommunikation auftreten können, wobei diese Latenzzeiten mit Hilfe der Kontrolleinheit 2 bzw. der Datenbank 3 ausgeglichen werden können, wodurch etwaige Systemausfälle weitestgehend vermieden werden.

Durch die lückenlose Aufzeichnung der Netzdaten können auch Informationen bezüglich der Alterung der Betriebsmittel, beispielsweise eines Transformators oder gegebenenfalls eines automatisierten Stufenstellers, gesammelt und ausgewertet werden, wobei aus der Messung diverser nichtelektrischer Größen am Transformator (z.B.: Temperatur, Gaszusammensetzung, Schaltzyklen des Stufenstellers, usw.) auf den aktuellen Zustand der Betriebsmittel in Alterungsdiagrammen geschlossen werden kann. Somit können Prozessabläufe kontinuierlich verbessert werden, wodurch aufwändige Datenbanksysteme in zentralen Leitstellen entfallen können.

Die Netzdatenverbindungen 4 zwischen der Automatisierungseinheit 8 einerseits und den dezentralen Erzeugungsanlagen 9, den Ladeeinheiten 10 und den flexiblen Lasten 11 andererseits können ohne eigens dafür vorgesehene Verbindungen mittels PLC über das Stromnetz erfolgen oder über herkömmliche TCP/IP Netzwerke (Ethernet, WiFi, WiMax, UMTS oder Ähnliches) ohne Nutzung der Leitungen des Stromnetzes. Die Netzdatenverbindung 4 zwischen der Automatisierungseinheit 8 und der Regelungseinheit 7 sowie zwischen der Regelungseinheit 7 und der übergeordneten Kontrollinstanz 1 wird über eigene Netze verwirklicht, beispielsweise ebenfalls über herkömmliche TCP/IP Netzwerke (Ethernet, WiFi, WiMax, UMTS oder Ähnliches). Dabei ist die Netzdatenverbindung 4 vorzugsweise als körperliche Leitung verwirklicht, insbesondere innerhalb eines Gerätes oder eines Schaltschranks.

Zwischen der Regelungseinheit 7 einerseits und der Kontrolleinheit 2 und der Datenbank 3 andererseits sind eine eigene körperliche Speicherleitung 5 und eine eigene körperliche Steuerbefehlsleitung 6 vorgesehen, da die Einheiten 2, 3 und 7 idealer Weise im selben Gerät (z.B. über USB-Schnittstellen verbunden) oder zumindest im gleichen Schaltschrank untergebracht sind. Grundsätzlich wird hier ebenfalls über TCP/IP Netzwerke (Ethernet, WiFi, WiMax, UMTS oder Ähnliches) kommuniziert.

Die Kontrollsignalleitungen 12 sind ebenfalls vorzugsweise als körperliche Leitungen ausgebildet, die Kommunikation kann jedoch generell ebenfalls über TCP/IP Netzwerke (Ethernet, WiFi, WiMax, UMTS oder Ähnliches) erfolgen.

### Bezugszeichenliste:

- 1: Kontrollinstanz;
- 2: Kontrolleinheit;
- 3: Datenbank;
- 4: Netzdatenverbindung;
- 5: Speicherleitung;
- 6: Steuerbefehlsleitung;
- 7: Regelungseinheit;
- 8: Automatisierungseinheit;
- 9: dezentrale Erzeugungsanlage (DEA);
- 10: Ladeeinheit für Elektromobilitätsanwendungen;
- 11: flexible Last;
- 12: Kontrollsignalleitung.

## Patentansprüche

1. Verfahren zum Überwachen von Zuständen eines Niederspannungsnetzes mit Hilfe von Netzdaten dieses Niederspannungsnetzes,
wobei das Niederspannungsnetz zumindest eine dezentrale Erzeugungsanlage (9), vorzugsweise eine Photovoltaikanlage, aufweist,
wobei das Niederspannungsnetz zumindest einen Verbraucher, vorzugsweise in Form einer flexiblen Last (11) und/oder einer Ladeeinheit (10) für Elektromobilitätsanwendungen, aufweist,
wobei die Erzeugungsanlage (9) und der Verbraucher (10, 11) über Datenverbindungen mit einer gemeinsamen Automatisierungseinheit (8) verbunden sind, welche Netzdaten an eine zugeordnete Regelungseinheit (7) zum Regeln der Erzeugungsanlage (9) und der Verbraucher (10, 11) leitet,
wobei die Regelungseinheit (7) Netzdaten an eine das gesamte Niederspannungsnetz überwachende, übergeordnete Kontrollinstanz (1) sendet und diese Stellbefehle an die Regelungseinheit (7) senden kann, **dadurch gekennzeichnet, dass** die Netzdaten der Regelungseinheit (7) kontinuierlich in einer Datenbank (3) gespeichert werden, eine Kontrolleinheit (2) daraus für den Normalbetrieb zulässige Werte der Netzdaten berechnet und bei Abweichung der aktuellen Netzdaten von den für den Normalbetrieb zulässigen Werten eine Störungsmeldung ausgibt.

2. Verfahren zum Überwachen von Zuständen eines Niederspannungsnetzes nach Anspruch 1, **dadurch gekennzeichnet, dass** die Störungsmeldung an die übergeordnete Kontrollinstanz (1) gesendet wird.

3. Verfahren zum Überwachen von Zuständen eines Niederspannungsnetzes nach Anspruch 1 oder 2, **dadurch gekennzeichnet, dass** neben der Netzdaten auch die Stellbefehle der übergeordneten Kontrollinstanz (1) kontinuierlich in der Datenbank (3) gespeichert werden, die Kontrolleinheit (2) eine Verknüpfung zwischen Netzdaten und daraus resultierendem Stellbefehl der übergeordneten Kontrollinstanz herstellt und die Kontrolleinheit (2) bei Ausfall der übergeordneten Kontrollinstanz (1) statt dieser jenen Stellbefehl an die Regelungseinheit (7) sendet, wenn Netzdaten vorliegen, die mit dem Stellbefehl verknüpft sind.

4. Verfahren zum Überwachen von Zuständen eines Niederspannungsnetzes nach Anspruch 1, 2 oder 3, **dadurch gekennzeichnet, dass** die Kontrolleinheit (2) erst dann Störungsmeldungen ausgibt oder Stellbefehle an die Regelungseinheit (7) sendet, wenn die Datenbank (3) eine vorgegebene Anzahl an Netzdaten gesammelt hat.

5. Verfahren zum Überwachen von Zuständen eines Niederspannungsnetzes nach einem der Ansprüche 1 bis 4, **dadurch gekennzeichnet, dass** die Kontrolleinheit (2) die Netzdaten und Stellbefehle zwischen der Regelungseinheit (7) und der Kontrollinstanz (1) zur Überwachung mittels zumindest einer Kontrollsignalleitung (12) abgreift.

6. Verfahren zum Überwachen von Zuständen eines Niederspannungsnetzes nach einem der Ansprüche 1 bis 5, **dadurch gekennzeichnet, dass** die Kontrolleinheit (2) die Netzdaten und Stellbefehle zwischen der Regelungseinheit (7) und der Automatisierungseinheit (8) zur Überwachung mittels zumindest einer Kontrollsignalleitung (12) abgreift.

7. Verfahren zum Überwachen von Zuständen eines Niederspannungsnetzes nach einem der Ansprüche 1 bis 6, **dadurch gekennzeichnet, dass** die Kontrolleinheit (2) bei Überschreiten einer vorgegebenen zulässigen Abweichung der in der Datenbank (3) eintreffenden Netzdaten von einem Mittelwert der in der Datenbank (3) bereits gespeicherten entsprechenden Netzdaten eine Störungsmeldung ausgibt.

8. Verfahren zum Überwachen von Zuständen eines Niederspannungsnetzes nach einem der Ansprüche 1 bis 7, **dadurch gekennzeichnet, dass** die Regelungseinheit (7) durch Computerprogramme mit offener Architektur und/oder unter Verwendung von Standardbetriebssystemen verwirklicht wird.

9. Verfahren zum Überwachen von Zuständen eines Niederspannungsnetzes nach Anspruch 8, **dadurch gekennzeichnet, dass** die Kontrolleinheit (2) auf dem gleichen Betriebssystem basiert wie die Regelungseinheit (7).

10. Vorrichtung zur Durchführung eines Verfahrens nach einem der Ansprüche 1 bis 9, umfassend
- eine Automatisierungseinheit (8), welche über Datenverbindungen mit zumindest einer dezentralen Erzeugungsanlage (9) und mit zumindest einem Verbraucher (10, 11) verbunden ist,
- eine der Automatisierungseinheit (8) zugeordnete Regelungseinheit (7) zum Regeln der Erzeugungsanlage (9) und der Verbraucher (10, 11), welche zur Datenübertragung mit der Automatisierungseinheit (8) verbunden ist,
- eine das gesamte Niederspannungsnetz überwachende, übergeordnete Kontrollinstanz (1), welche zum Austausch von Netzdaten und Stellbefehlen mit der Regelungseinheit (7) verbunden ist, **dadurch gekennzeichnet,**
- **dass** eine Datenbank (3) vorgesehen ist, mit welcher Netzdaten der Regelungseinheit (7) kontinuierlich gespeichert werden können,
- **dass** eine Kontrolleinheit (2) vorgesehen ist, welche mit der Datenbank (3) verbunden ist und mit welcher für den Normalbetrieb zulässige Werte der Netzdaten berechnet und bei Abweichung der aktuellen Netzdaten von den für den Normalbetrieb zulässigen Werten eine Störungsmeldung ausgegeben werden kann.
